# EUROPEAN PATENT SPECIFICATION

(11) **EP 3 461 291 B1**
(45) Date of publication and mention of the grant of the patent: **28.09.2022**
(21) Application number: 18713408.5
(22) Date of filing: 26.01.2018
(51) Int. Cl.: G06K 9/00

(54) **IMPLEMENTATION OF A BIOMETRIC ENROLLMENT USER INTERFACE**
IMPLEMENTIERUNG EINER BENUTZERSCHNITTSTELLE FÜR BIOMETRISCHE REGISTRIERUNG
MISE EN OEUVRE D'UNE INTERFACE UTILISATEUR D'INSCRIPTION BIOMÉTRIQUE

(30) Priority: 09.09.2017 US 201762556413 P; 11.09.2017 US 201762557130 P; 22.09.2017 DK PA201770712; 22.09.2017 DK PA201770713; 22.09.2017 DK PA201770714; 22.09.2017 DK PA201770715; 02.11.2017 US 201762581025 P
(43) Date of publication of application: 03.04.2019
(60) Divisional application: 19160344.8
(73) Proprietor: Apple Inc., Cupertino, CA 95014 (US)
(72) Inventor: VAN OS, Marcel, Cupertino, California 95014 (US); ABBASIAN, Reza, Cupertino, California 95014 (US); ANTON, Peter D., Cupertino, California 95014 (US); BEHZADI, Arian, Cupertino, California 95014 (US); BERNSTEIN, Jeffrey, Traer, Cupertino, California 95014 (US); DASCOLA, Jonathan, R., Cupertino, California 95014 (US); DEVINE, Lynne, Cupertino, California 95014 (US); DRYER, Allison, Cupertino, California 95014 (US); FOSS, Christopher, Patrick, Cupertino, California 95014 (US); GRIFFIN, Bradley, W., Cupertino, California 95014 (US); LEMMENS, Cas, Cupertino, California 95014 (US); MALIA, Joseph, A., Cupertino, California 95014 (US); MARI, Pedro, Cupertino, California 95014 (US); MOHSENI, Daamun, Cupertino, California 95014 (US); MOUILLESEAUX, Jean-Pierre, M., Cupertino, California 95014 (US); MOUSSETTE, Camille, Cupertino, California 95014 (US); PAUL, Grant, Cupertino, California 95014 (US); PRESTON, Daniel, Trent, Cupertino, California 95014 (US); PUGH, Chelsea, E., Cupertino, California 95014 (US); SHARMA, Praveen, Cupertino, California 95014 (US); TYLER, William, M., Cupertino, California 95014 (US); VERWEIJ, Hugo, Cupertino, California 95014 (US); YING, Charles, H., Cupertino, California 95014 (US); YERKES, Giancarlo, Cupertino, California 95014 (US); DYE, Alan C., Cupertino, California 95014 (US); IVE, Jonathan P., Cupertino, California 95014 (US)
(74) Representative: COPA Copenhagen Patents
(86) International application number: PCT/US2018/015603
(87) International publication number: WO 2018/226265

(56) References cited:
- EP-A1- 3 057 024
- US-A1- 2014 003 677
- US-A1- 2014 254 891
- US-A1- 2017 169 202

## Description

### FIELD

The present disclosure relates generally to biometric authentication, and more specifically to interfaces and techniques for enrollment and authentication of biometric features.

### BACKGROUND

Biometric authentication, for instance of a face, iris, or fingerprint, using electronic devices is a convenient and efficient method of authenticating users of the electronic devices. Biometric authentication allows a device to quickly and easily verify the identity of any number of users.

US 2017/169202 A1 discloses a method of capturing biometric data that includes calculating, by a terminal device, an angle between a surface of the terminal device and an X-axis of the terminal device.

US 2014/254891 A1 discloses a face image registration apparatus comprising: a face video image acquiring unit configured to acquire a front face image and at least one or more moving video images corresponding to predefined face pose changes; a similarity measurement unit configured to measure a similarity of the acquired front face image and each of the acquired at least one or more moving video images; an image selection unit configured to select at least images from the at least one or more moving video images based on the measured similarities; and an image storage unit configured to store the selected at least one or more images on the user basis.

### BRIEF SUMMARY

Some techniques for implementing biometric authentication using electronic devices, however, are generally cumbersome. For example, some existing techniques, such as those directed to facial recognition, require a user to almost perfectly align a biometric feature in a same manner during both enrollment and each iteration of authentication. Deviation from the alignment of the biometric feature often results in a false negative result. As a result, a user is, optionally, required to unnecessarily perform multiple iterations of biometric authentication, or is, optionally, discouraged from using the biometric authentication altogether. As another example, some existing techniques rely solely on a two-dimensional representation of a biometric feature. As a result, authentication of a user is, optionally, limited by virtue of a failure to analyze one or more three-dimensional characteristics of the biometric feature and also optionally requires a user to unnecessarily perform additional iterations of biometric authentication. In view of the foregoing drawbacks, existing techniques require more time than necessary, wasting both user time and device energy. This latter consideration is particularly significant in the operation of battery-operated devices.

Accordingly, the present technique provides electronic devices with faster, more efficient methods and interfaces for implementing biometric authentication. Such methods and interfaces optionally complement or replace other methods for implementing biometric authentication. Such methods and interfaces reduce the cognitive burden on a user and produce a more efficient human-machine interface. For battery-operated computing devices, such methods and interfaces conserve power and increase the time between battery charges. Such methods and interfaces also reduce the number of unnecessary, extraneous, or repetitive input required at computing devices, such as smartphones and smartwatches.

The invention is defined by the independent claims. The dependent claims define advantageous embodiments. These embodiments and additional non-claimed embodiments, which are examples of related techniques to help understand the claimed invention, are further described below..

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for implementing biometric authentication, thereby increasing the effectiveness, efficiency, and user satisfaction with such devices. Such methods and interfaces optionally complement or replace other methods for implementing biometric authentication.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIGS. 13A-13R illustrate exemplary user interfaces for providing hints during a biometric enrollment process.
FIGS. 14A-14C are a flow diagram illustrating methods of providing hints during a biometric enrollment process.

### DESCRIPTION OF EMBODIMENTS

The following description sets forth exemplary methods, parameters, and the like. It should be recognized, however, that such description is not intended as a limitation on the scope of protection but is instead provided as a description of exemplary embodiments.

There is a need for electronic devices that provide efficient methods and interfaces for implementing biometric authentication of biometric features. For example, there is a need for electronic devices that provide a convenient and efficient method for enrolling one or more portions of a biometric feature. For another example, there is a need for electronic devices that provide a quick and intuitive technique for selectively accessing secure data in accordance with biometric authentication. For another example, there is a need for electronic devices that provide a quick and intuitive technique for enabling a function of a device in accordance with biometric authentication. Such techniques can reduce the cognitive burden on a user who enrolls a biometric feature and/or biometrically authenticates with a device, thereby enhancing overall productivity. Further, such techniques can reduce processor and battery power otherwise wasted on redundant user inputs.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad).

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that is, in some circumstances, otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user. Using tactile outputs to provide haptic feedback to a user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some embodiments, a tactile output pattern specifies characteristics of a tactile output, such as the amplitude of the tactile output, the shape of a movement waveform of the tactile output, the frequency of the tactile output, and/or the duration of the tactile output.

When tactile outputs with different tactile output patterns are generated by a device (e.g., via one or more tactile output generators that move a moveable mass to generate tactile outputs), the tactile outputs can invoke different haptic sensations in a user holding or touching the device. While the sensation of the user is based on the user's perception of the tactile output, most users will be able to identify changes in waveform, frequency, and amplitude of tactile outputs generated by the device. Thus, the waveform, frequency and amplitude can be adjusted to indicate to the user that different operations have been performed. As such, tactile outputs with tactile output patterns that are designed, selected, and/or engineered to simulate characteristics (e.g., size, material, weight, stiffness, smoothness, etc.); behaviors (e.g., oscillation, displacement, acceleration, rotation, expansion, etc.); and/or interactions (e.g., collision, adhesion, repulsion, attraction, friction, etc.) of objects in a given environment (e.g., a user interface that includes graphical features and objects, a simulated physical environment with virtual boundaries and virtual objects, a real physical environment with physical boundaries and physical objects, and/or a combination of any of the above) will, in some circumstances, provide helpful feedback to users that reduces input errors and increases the efficiency of the user's operation of the device. Additionally, tactile outputs are, optionally, generated to correspond to feedback that is unrelated to a simulated physical characteristic, such as an input threshold or a selection of an object. Such tactile outputs will, in some circumstances, provide helpful feedback to users that reduces input errors and increases the efficiency of the user's operation of the device.

In some embodiments, a tactile output with a suitable tactile output pattern serves as a cue for the occurrence of an event of interest in a user interface or behind the scenes in a device. Examples of the events of interest include activation of an affordance (e.g., a real or virtual button, or toggle switch) provided on the device or in a user interface, success or failure of a requested operation, reaching or crossing a boundary in a user interface, entry into a new state, switching of input focus between objects, activation of a new mode, reaching or crossing an input threshold, detection or recognition of a type of input or gesture, etc. In some embodiments, tactile outputs are provided to serve as a warning or an alert for an impending event or outcome that would occur unless a redirection or interruption input is timely detected. Tactile outputs are also used in other contexts to enrich the user experience, improve the accessibility of the device to users with visual or motor difficulties or other accessibility needs, and/or improve efficiency and functionality of the user interface and/or the device. Tactile outputs are optionally accompanied with audio outputs and/or visible user interface changes, which further enhance a user's experience when the user interacts with a user interface and/or the device, and facilitate better conveyance of information regarding the state of the user interface and/or the device, and which reduce input errors and increase the efficiency of the user's operation of the device.

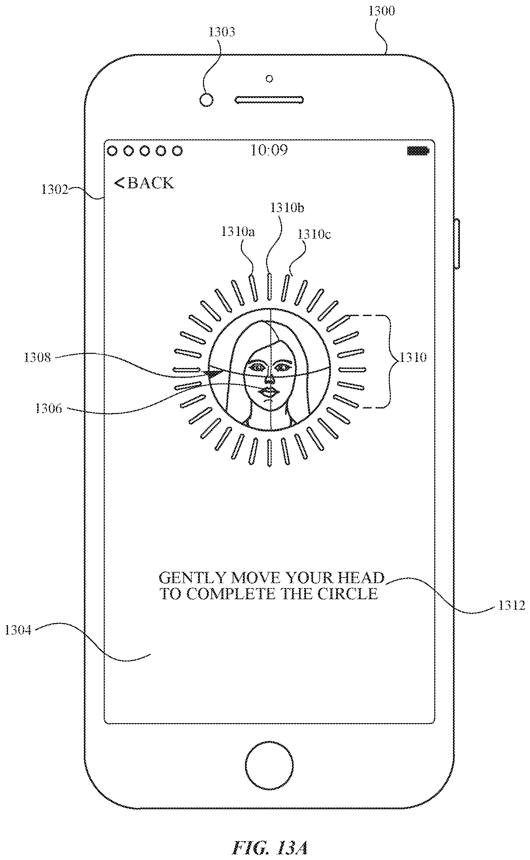

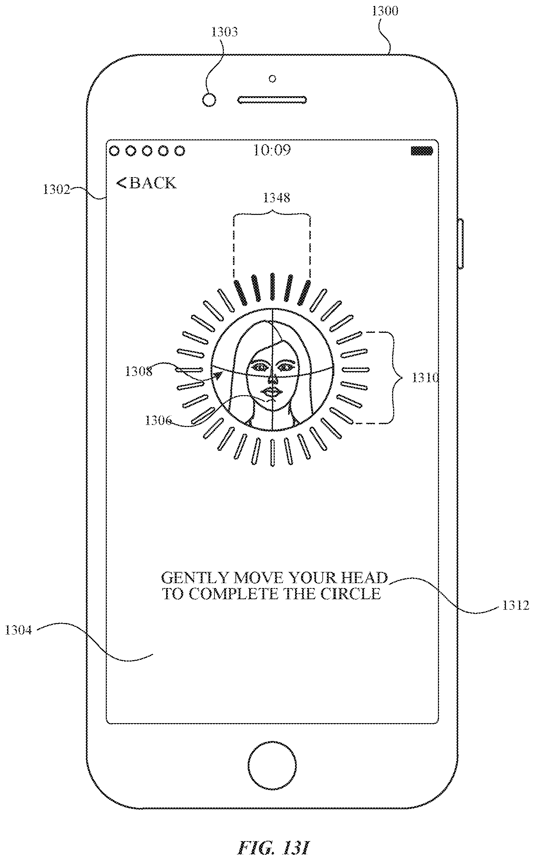

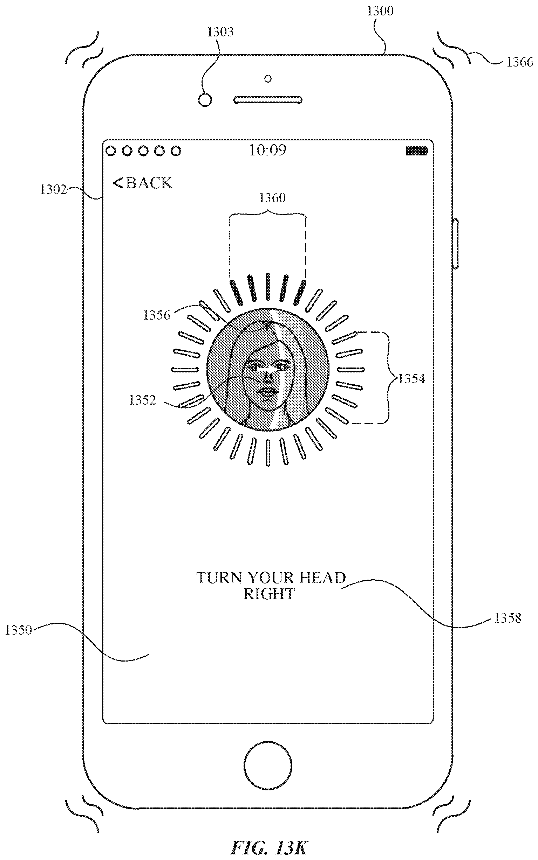

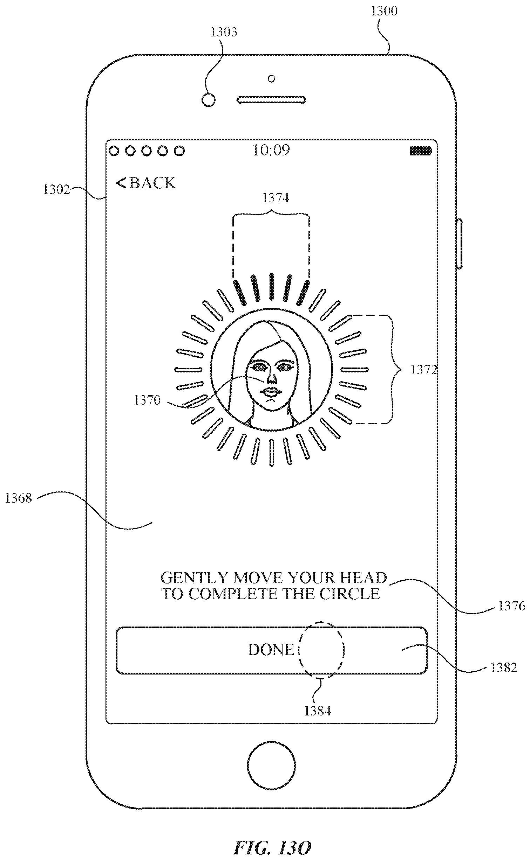

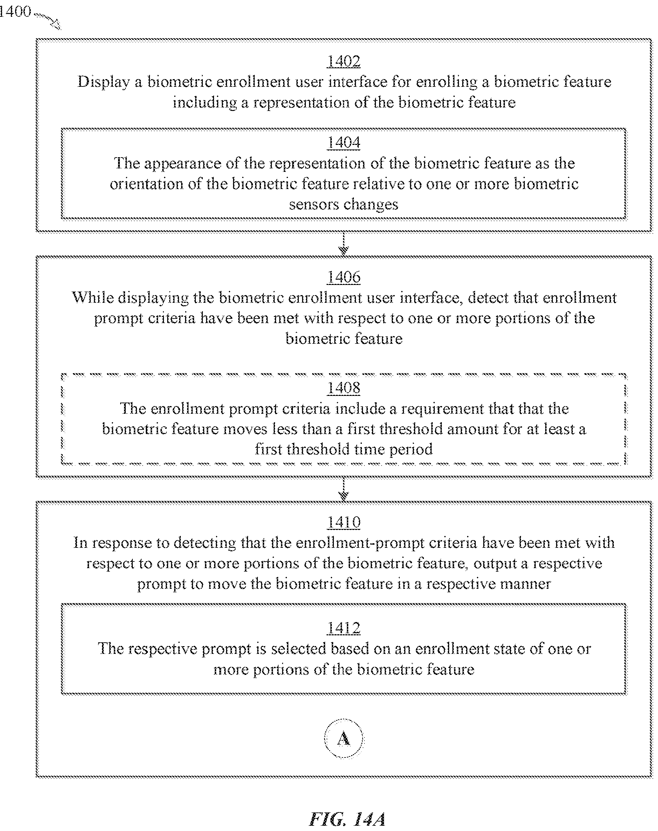

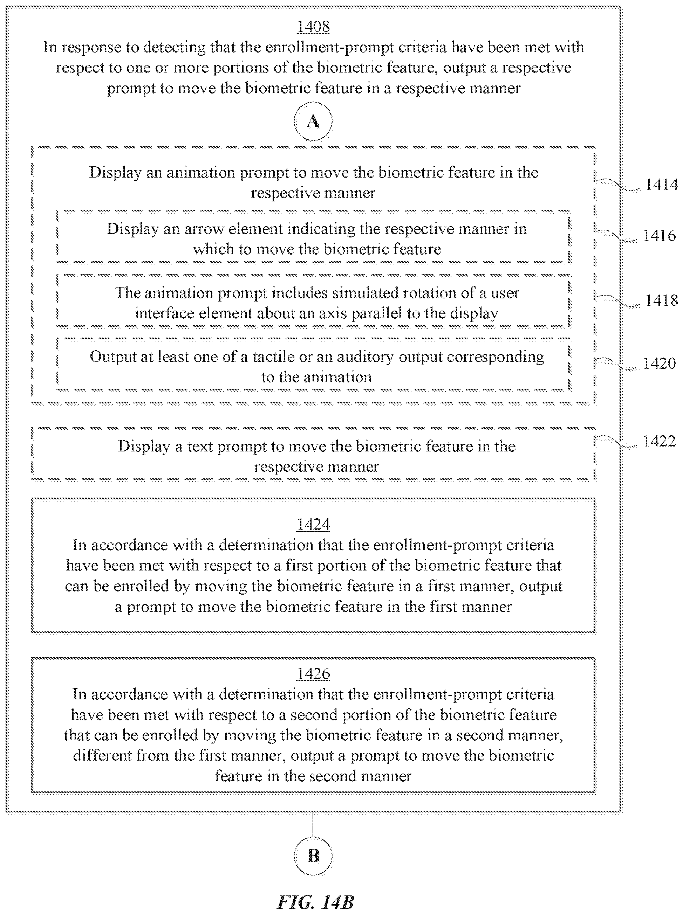

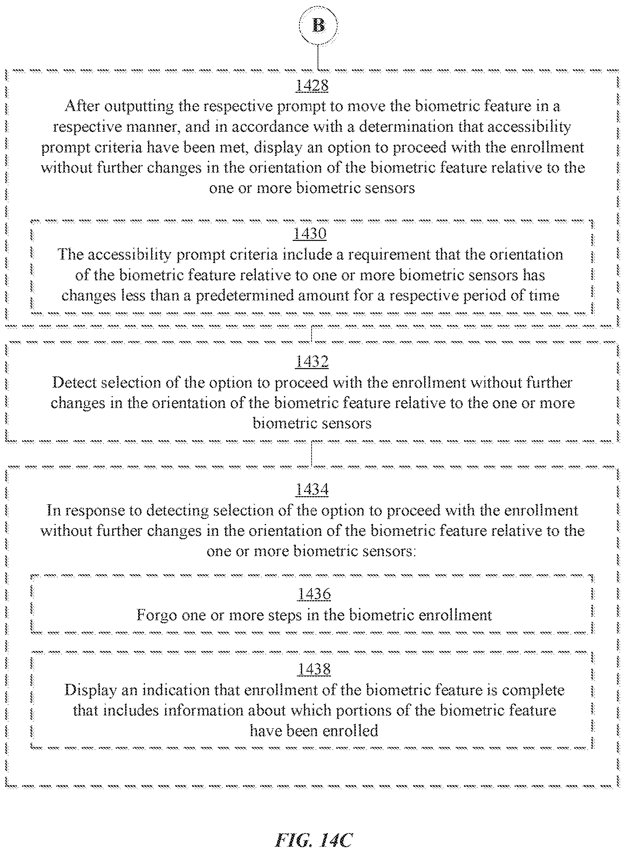

FIGS. 13A-13R illustrate exemplary user interfaces for registering a biometric feature on an electronic device in accordance with some embodiments. The user interfaces in these figures are used to illustrate the processes described below, including the processes in FIG. 14.

FIG. 13A illustrates an electronic device 1300. In the non-limiting exemplary embodiment illustrated in FIGS. 13A-13R, electronic device 1300 is a smartphone. In other embodiments, electronic device 1300 can be a different type of electronic device, such as a wearable device (e.g., a smartwatch). Electronic device 1300 has a display 1302, one or more input devices (e.g., touchscreen of display 1302, a button, a microphone), and a wireless communication radio. In some examples, the electronic device includes a plurality of cameras. In some examples, the electronic device includes only one camera. In some examples, the electronic device includes one or more biometric sensors which, optionally, include a camera, such as an infrared camera, a thermographic camera, or a combination thereof. In some examples, the one or more biometric sensors 1303 are the one or more biometric sensors. In some examples, the device further includes a light-emitting device (e.g., light projector), such as an IR flood light, a structured light projector, or a combination thereof. The light-emitting device is, optionally, used to illuminate the biometric feature (e.g., the face) during capture of biometric data of biometric features by the one or more biometric sensors.

As illustrated in FIG. 13A, device 1300 displays a face enrollment user interface 1304 on display 1302. Face enrollment interface 1304 includes user facial image 1306. In some embodiments, user facial image 1306 is an image of the user captured by one or more cameras on device 1300 (e.g., biometric sensor 1303). For example, user facial image 1306 is, optionally, a live preview of the image data captured by the one or more cameras (e.g., a digital viewfinder) that updates continuously as the field of view of the camera and/or the field of view's contents change. In some embodiments, background content is removed such that the only the user's face is visible in facial image 1306. Face enrollment interface 1304 also includes orientation guide 1308 that is superimposed (e.g., overlaid) on user facial image 1106. Orientation guide 1308 optionally is a set of curved lines (e.g., crosshairs) that extend into a virtual z-dimension (e.g., along an axis normal to the plane of the display) and intersect over the center of user facial image 1306. Thus, the curved lines of orientation guide 1308 optionally appears to bulge outwards relative to the plane of display 1302 to give a sense of the position of the user's head in three-dimensional space.

Face enrollment user interface 1304 includes enrollment progress meter 1310. Enrollment progress meter 1310 includes a set of display elements (e.g., progress elements 1310a, 1310b, and 1310c) that are arranged around user facial image 1306 and orientation guide 1308. In the example of FIG. 13A, the progress elements are a set of lines that extend radially outward from user facial image 1306 and are arranged in a circular pattern. In some embodiments, progress elements 1310a, 1310b, 1310c, etc. indicate an orientation of the user's face needed to enroll corresponding facial features. For example, progress elements in the upper portion of enrollment meter 1310 optionally move, fill in, elongate, and/or change color when the user's head is tilted upwards, which allows the one or more cameras on device 1300 to capture image data of the under-side of the user's face. In the example of FIG. 13A, device 1310 displays progress elements in enrollment progress meter 1310 in an unenrolled state (e.g., the progress elements are greyed out).

In the example of FIG. 13A, face enrollment interface 1304 includes text prompt 1312, which instructs the user to begin moving their face relative to the device in order to advance enrollment progress meter 1310 (e.g., enroll their facial features). In some embodiments, device 1300 displays text prompt 1312 before any portion of the user's face as been enrolled.

While displaying face enrollment interface 1304, device 1300 detects criteria for displaying enrollment prompts (e.g., hints). In some examples, the enrollment prompt criteria include a requirement that the user's face has moved less than a first threshold amount in a predetermined time period, as determined by biometric sensor 1303.

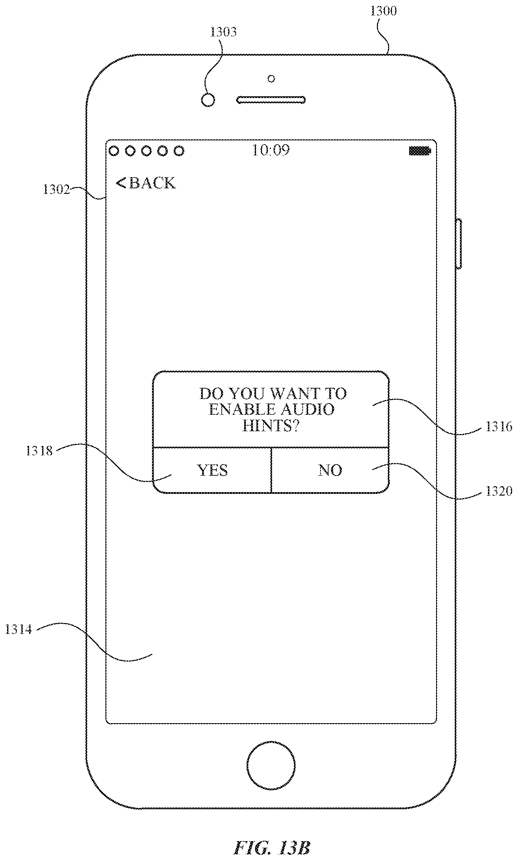

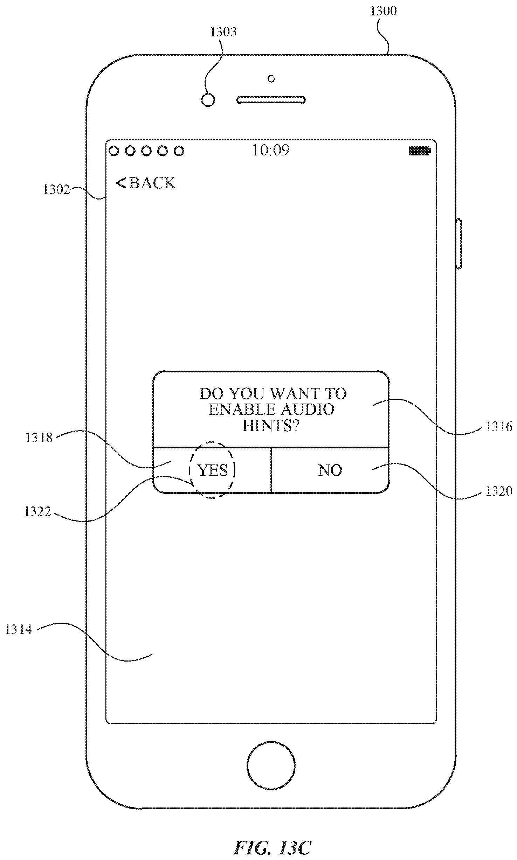

In some embodiments, in response to detecting that these enrollment hint criteria are met, device 1300 displays audio hint enablement interface 1314 as shown in FIG. 13B and 13C. In the example of FIG. 13B, hint enablement interface 1314 includes text prompt 1316, informing the user of the option to either enable or disable audio hints. Accordingly, in some examples, hint enablement interface 1314 includes yes affordance 1318 and no affordance 1320. In some embodiments, in response to activation (e.g., selection) of no affordance 1320, device 1300 displays face enrollment interface 1304 a second time, allowing the user to proceed with enrollment of his or her facial features without the prompts and/or hints described below. In the example of FIG. 13C, however, device 1300 detects activation (e.g., selection) of yes affordance 1310. In some examples, the activation is a user input at contact area 1322 (e.g., a tap or swipe gesture).

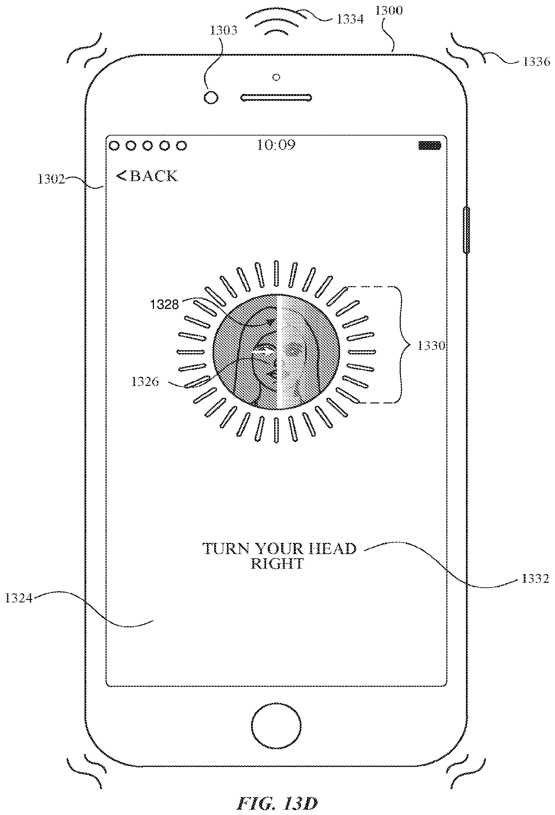

In response to detecting activation of yes affordance 1320, device 1300 displays hint-enabled enrollment interface 1324, for example, as illustrated in the example of FIG. 13D. In some embodiments, hint-enabled enrollment interface 1324 or one or more of the prompts described below are displayed whether or not the user has enabled audio hints (e.g., in response to detecting that the user's face has not moved sufficiently in a pre-determined period of time). In the example of FIG. 13D, hint-enabled enrollment interface 1324 includes user facial image 1326 that has similar or identical visual characteristics to user facial image 1306. For example, in some embodiments, user facial image 1326 is an image of the user captured by one or more cameras on device 1300 (e.g., biometric sensor 1303). For example, user facial image 1326 is, optionally, a live preview of the image data captured by biometric sensor 1303 (e.g., a digital viewfinder) that updates continuously as the field of view of the camera and/or the field of view's contents change. Hint-enabled enrollment interface 1324 includes visual movement prompt 1328 that is overlaid (e.g., superimposed) on user facial image 1326. In the example of FIG. 13D, visual movement prompt 1328 includes an arrow element indicating a requested direction in which the user should move (e.g., rotate and/or tilt) his or her face in order to enroll a corresponding portion (e.g., angular view) of the face. In some embodiments, visual movement prompt 1328 is partially transparent such that the underlying user facial image 1326 is also visible. In the example of FIG. 13D, the arrow element of visual movement prompt 1328 instructs the user to move (e.g., rotate, tilt, or turn) their face to the right (e.g., towards a right portion of enrollment progress meter 1330 in order to enroll an angular view of the left side of the user's face).

In some embodiments, device 1300 displays text prompt 1332, providing written instructions to user that match visual movement prompt 1328. In the example of FIG. 13D, text prompt 1332 provides written instruction to the user to turn their head to the right (e.g., in the same direction indicated by the arrow element in visual prompt 1328). In some embodiments, device 1300 also issues audio output 1334 corresponding to visual movement prompt 1328 and/or text prompt 1328. For example, if a screen reader functionality is enabled, audio output 1334 is a verbal description of the requested movement (e.g., an auditory recitation of text prompt 1332). In some embodiments, audio output 1334 is issued instead of or in addition to visual movement prompt 1328 and/or text prompt 1332. In some embodiments, device 1300 also issues tactile output 1336 (e.g., a vibration, e.g., instead of or in addition to audio output 1334). In some examples, audio output 1334 and/or tactile output 1336 coincides with movement (e.g., an animation) of visual movement prompt 1328, as described in more detail below.

In some embodiments, device 1300 displays an animation of visual movement prompt 1328 to provide further indication of the requested movement. In the example of FIGS. 13D-13E, device 1300 transitions display of the arrow element of visual prompt 1328 in the requested direction of movement (e.g., to the right). In some embodiments, visual prompt 1328 also includes one or more lines (e.g., arcs) that extend over a central portion of user facial image 1326. In some examples, these lines appear extend out of the plane of display 1302 into a virtual z-dimension (e.g., normal to the display). In the examples of FIG. 13D-13E, device 1300 rotates the arc in the requested direction of movement (e.g., to the right) to provide visual demonstration the requested movement in three dimensions that accompanies movement of the arrow element. In some examples, while displaying the animation of visual movement prompt 1328, device 1300 continues to display text prompt 1332. In some examples, device 1300 issues audio output 1334 and/or tactile output 1336 while displaying the animation such that the outputs correspond to movement of the arrow and/or arc element of visual prompt 1328.

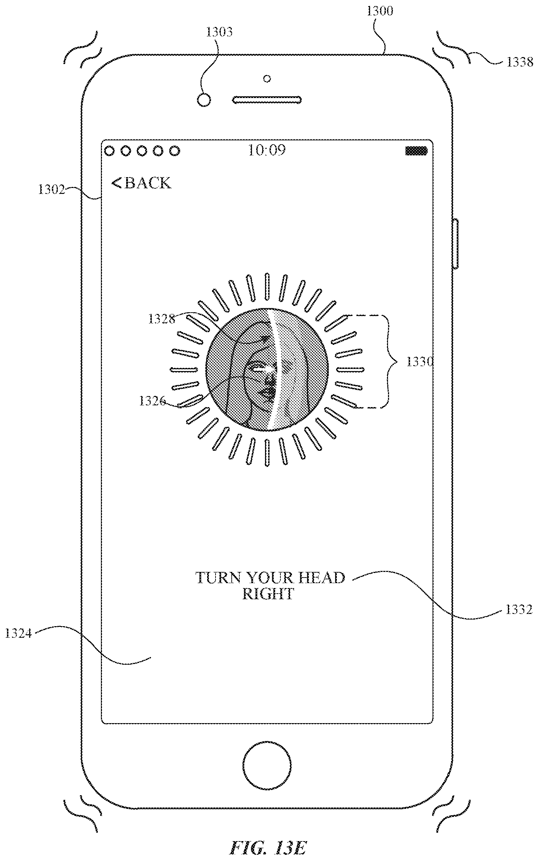

In some examples, while displaying visual movement prompt 1328 and/or text prompt 1332, device 1300 detects (e.g., for a second time) that the orientation of the user's face with respect to biometric sensor 1303 has not changed for a predetermined amount of time. In response, device 1300 issues a tactile output (e.g., tactile output 1338 shown in FIG. 13E). In some examples, tactile output 1338 is generated as an error to indicate that facial enrollment has stopped (e.g., because the user has not moved his or her face for a predetermined amount of time).

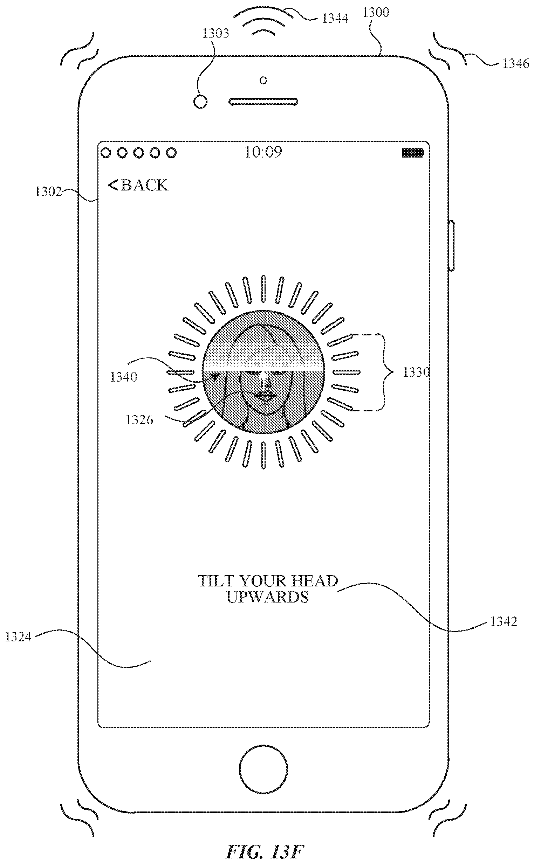

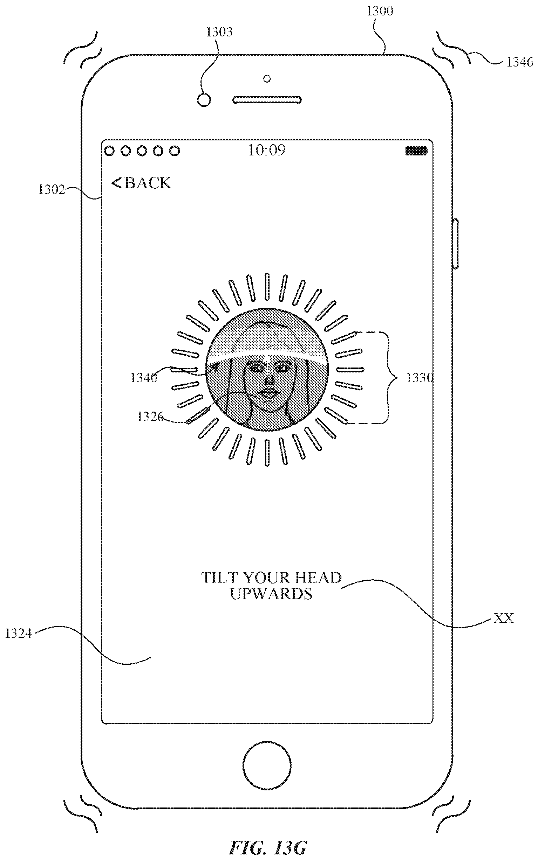

In the example of FIG. 13F, in response to detecting that the orientation of the user's face has not changed for the predetermined amount of time, device 1300 displays a second set of enrollment hints that prompt the user to move his or her face in a different direction. In the example of FIG. 13F, device 1300 displays second visual movement prompt 1340. Second visual movement prompt 1340 has similar visual characteristics to visual movement prompt 1328, but corresponds to a second, different requested direction of movement than visual prompt 1328 (e.g., up instead of right). For example, second visual movement prompt 1340 includes a second arrow element that points in a different direction than the arrow element of visual movement prompt 1328 (e.g., up instead of right). Additionally, in some examples, second visual movement prompt 1340 includes an arc element similar to that of visual prompt 1328, which is used to provide a visual demonstration of the requested second direction of movement as described below with respect to FIGS. 13F and 13G.

In some examples, the second set of enrollment hints includes text prompt 1342 providing written instructions to user that match visual movement prompt 1340. In the example of FIG. 13F, text prompt 1342 provides written instruction to the user to tilt their head to the upwards (e.g., in the second direction indicated by the arrow element of second visual prompt 1340). In the example of FIG. 13F, device 1300 also issues audio output 1344 corresponding to second visual movement prompt 1340 and/or text prompt 1342. For example, if the screen reader functionality is enabled, audio output 1344 is a verbal description of the requested movement (e.g., an auditory recitation of text prompt 1342). In some embodiments, device 1300 issues tactile output 1346 (e.g., a vibration, e.g., instead of or in addition to audio output 1334).

As illustrated in FIGS. 13F-13G, in some embodiments, device 1300 displays an animation of visual movement prompt 1340 to provide further indication of the second requested direction of movement. In the example of FIGS. 13F-13G, device 1300 transitions display of the arrow element of second visual prompt 1340 in the second requested direction of movement (e.g., upward). In the examples of FIG. 13F-13G, the animation also rotates the arc element of second visual prompt 1340 in the second requested direction of movement (e.g., upwards into the plane of the display) to provide visual demonstration the requested movement in three dimensions that accompanies movement of the arrow element. In some examples, while displaying the animation of visual movement prompt 1340, device 1300 continues to display text prompt 1340. In some examples, device 1300 issues audio output 1344 and/or tactile output 1346 while displaying the animation such that the outputs correspond to movement of the arrow and/or arc element of visual prompt 1340.

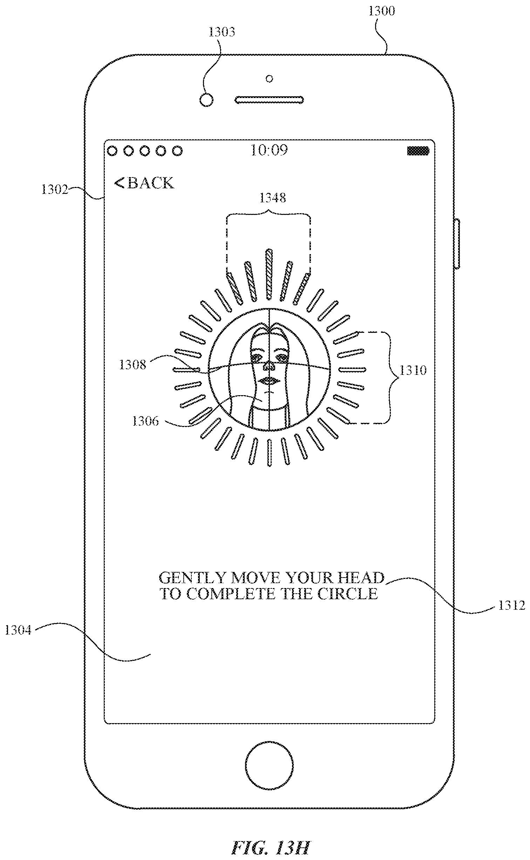

Turning now to FIG. 13H, device 1300 detects a change in orientation of the user's face relative to biometric sensor 1303 (e.g., the user is tilting or has tilted his or her face upwards, the second requested direction of movement). In response to detecting the change in orientation, device displays (e.g., for a second time) face enrollment interface 1304, described above with respect to FIG. 13A. In the example of FIG. 13H, device 1300 has updated (e.g., displayed movement of) user facial image 1306 to reflect the change in orientation of the user's face. In some embodiments, orientation guide 1308 tracks the movement (e.g., moves along with) user facial image 1306 to visually emphasize tilting and rotational movements of the user's face in three-dimensions. For example, the center (e.g., intersection) of orientation guide 1308 is optionally positioned at a central point on user facial image 1306 and moves along with it. In some examples, device 1300 also adjusts the curvature of the lines comprising orientation guide 1308 to give the appearance of three-dimensional rotation (e.g., upwards into the plane of the display). In some embodiments, the device emphasizes orientation guide while it is in motion (e.g., while the orientation of the user's face is changing). For example, device 1300 optionally darkens orientation guide 1308 while it is in motion and/or display a fading trail as it tracks movement of the user's face. In this case, device 1300 optionally reduces this emphasis on orientation guide 1308 relative to user facial image 1306 when the user's face is not moving.

As shown in the example of FIG. 13G, in response to detecting that the user's face is oriented towards progress meter portion 1348 (e.g., a set of one or more progress elements such as 1310a, 1310b, 1310c), device 1300 updates the display of the progress elements in meter portion 1348 to an "enrolling" state by changing the appearance of the progress elements in meter portion 1348. For example, device 1300 optionally enlarges and/or change the color of progress elements in meter portion 1348 while user's face is oriented towards meter portion 1348. In some examples, device 1300 elongates the progress ticks and changes their color from grey to blue when updating progress elements to the "enrolling" state. In some embodiments, changing the display of progress elements to the "enrolling" state in this manner indicates that device 1300 is capturing (e.g., enrolling) facial imaging data for the angular view corresponding to the current orientation of the user's face. In the example of FIG. 13G, device 1300 maintains progress elements in progress meter 1310 (e.g., progress elements that are not part of meter portion 1348) in an unenrolled state (e.g., greyed out) to indicate that device 1300 has not yet detected the user's face in orientations corresponding to those progress elements. In some embodiments, the display of meter portion 1348 is updated in this manner only if the user's face is sufficiently rotated towards meter portion 1348 (e.g., if the user's face is rotated by at least a threshold amount or angle).

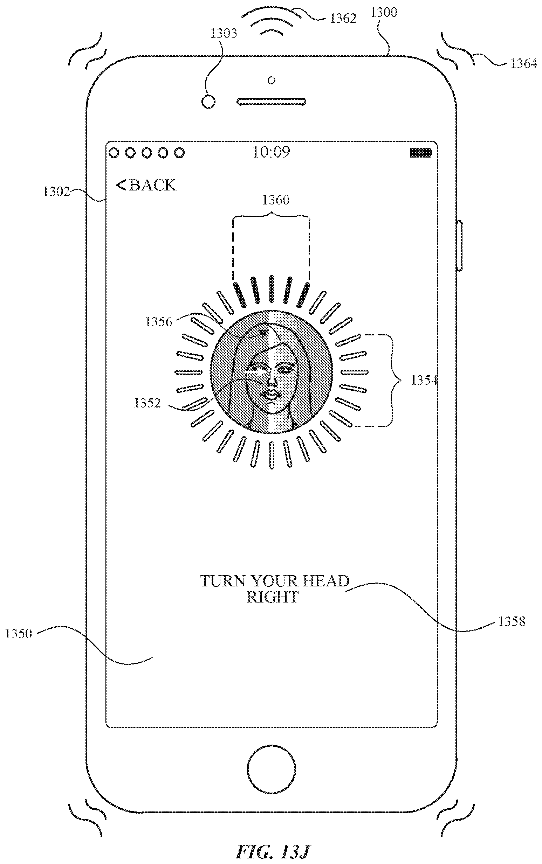

Turning now to the example of FIG. 131, device 1300 detects that the user's face is no longer in the orientation corresponding to meter portion 1348 (e.g., the user has tilted their head downwards back to a neutral position). In response, device 1300 changes the appearance of progress elements in meter portion 1348 a second time to an "enrolled" state. In the example of FIG. 131, device 1300 updates the display of progress ticks in portion 1348 from the elongated "enrolling" state by shortening the progress ticks and changing their color a second time. For example, progress elements in the "enrolled" state are the same length and/or size of progress elements in the "unenrolled" state, but are displayed in green to indicate that the corresponding portion of the user's face (e.g., the angular view captured in FIG. 13J) has been successfully enrolled. In the example of FIG. 13J, device 1300 maintains other progress elements in enrollment progress meter 1310 in an unenrolled state to indicate that the device has not yet detected the user's face in an orientation corresponding to those progress elements. In response to detecting the change in facial orientation, device 1300 also moves orientation guide 1308 such that it tracks the movement of user facial image 1306 in the digital viewfinder.

Turning now to the example of FIG. 13J, after detecting the change in orientation depicted in FIG. 131, the device detects (e.g., for a second time) that the orientation of the user's face relative to biometric sensor 1303 has not changed for a predetermined period of time. In response, device 1300 displays hint-enabled enrollment interface 1350. In some embodiments, hint-enabled enrollment interface 1350 is displayed automatically. In some embodiments, hint-enabled enrollment interface 1350 is displayed in response to detecting activation (e.g., selection) of an affordance (e.g., similar to yes affordance 1318 on hint-enablement interface 1314). In some embodiments, hint-enabled enrollment interface 1350 and its components (e.g., user facial representation 1352, enrollment progress meter 1354, visual movement prompt 1356, and text prompt 1358) have the same visual characteristics as described above with respect to hint-enablement interface 1324 in FIG. 13D. In the example of FIG. 13J, however, device 1300 displays progress elements in meter portion 1360 of enrollment progress meter 1354 in the "enrolled" state, since the facial orientation corresponding to the same portion of progress meter 1330 has already been enrolled (e.g., in the manner of FIG. 13H).

In the example of FIGS. 13J-13K, device 1300 displays an animation of visual movement prompt 1356 that prompts the user to move his or her face into an orientation that has not yet been enrolled. For example, the animation of visual prompt 1356 prompts the user to move his or her face in the first requested direction (e.g., to the right). The animation of visual movement prompt 1356 has similar or identical characteristics to the animation of visual movement prompt 1328 described above with respect to FIGS. 13D-13E. For example, device 1300 transitions display of the arrow element of visual prompt 1356 in a requested direction of movement corresponding to a facial orientation that has not yet been enrolled (e.g., to the right). In the examples of FIG. 13J-13K, the animation also rotates the arc element of visual prompt 1356 in the requested direction of movement (e.g., to the right) to provide visual demonstration the requested movement in three dimensions that accompanies movement of the arrow element. In some examples, while displaying the animation of visual movement prompt 1356, device 1300 continues to display text prompt 1358, which provides a written description of the requested movement. In some examples, device 1300 issues audio output 1362 and/or tactile output 1364 while displaying the animation such that the outputs correspond to movement of the arrow and/or arc element of visual prompt 1340.

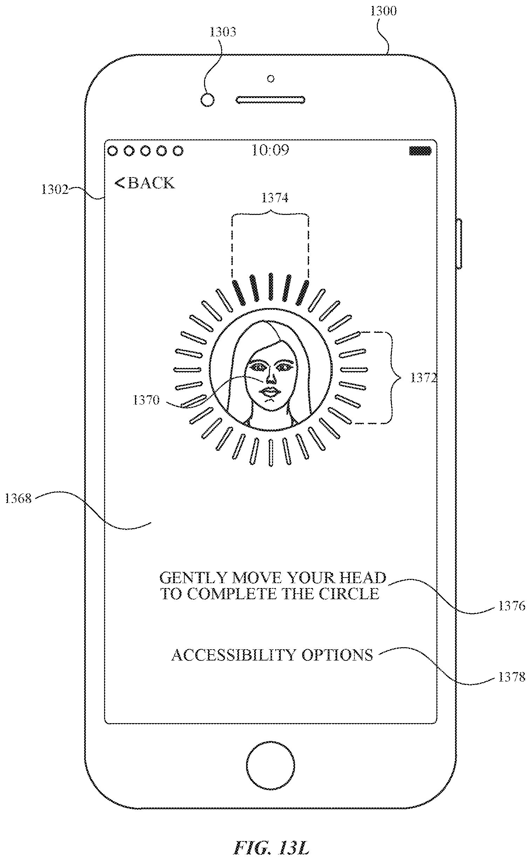

Turning to the example of FIG. 13L, device 1300 has detected (e.g., for a third time) that the orientation of the user's face with respect to biometric sensor 1303 has not changed for a predetermined amount of time. In the example of FIG. 13L, in response to detecting little to no change in the user's facial orientation, device 1300 displays accessibility enrollment interface 1368. In some examples, accessibility enrollment interface includes user facial image 1370, which optionally has similar or identical characteristics to user facial image 1308. In particular, user facial image 1370, optionally, is a live preview of image data captured by biometric sensor 1303. In the example of FIG. 13L, accessibility enrollment interface 1368 includes enrollment progress meter 1372, which is, optionally, displayed surrounding user facial image 1370. In some embodiments, the display of meter portion 1370 indicates orientations and/or portions of the user's face that have been previously enrolled (e.g., while device 1300 displayed enrollment interface 1304 or hint enabled enrollment interfaces 1324 and/or 1350 during a previous stage of enrollment). For example, device 1300 displays progress elements in portion 1374 of progress meter 1370 (which corresponds to meter portions 1348 and/or 1360). In the example of FIG. 13L, accessibility enrollment interface 1368 also includes accessibility options affordance 1378. In some embodiments, activation of accessibility options affordance 1378 allows the user to set up biometric (e.g., face) authentication with only a partial scan (e.g., after enrolling only a subset of the face orientations or portions that are be enrolled during a full scan).

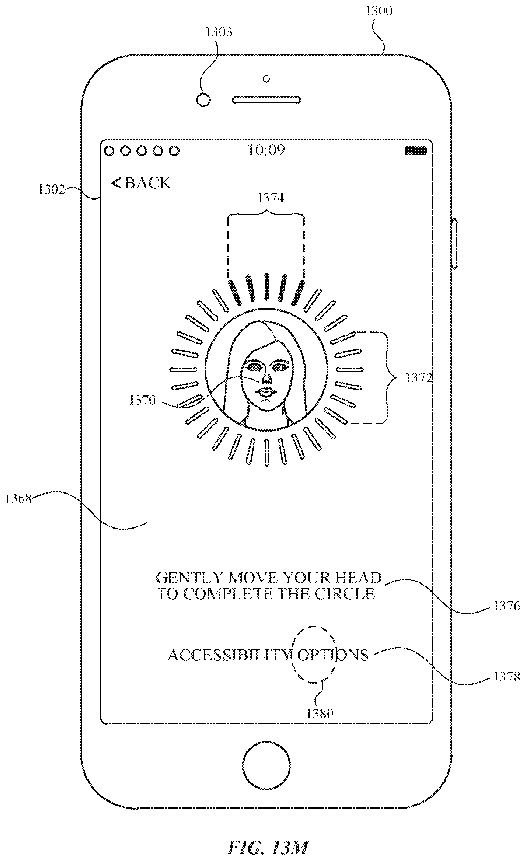

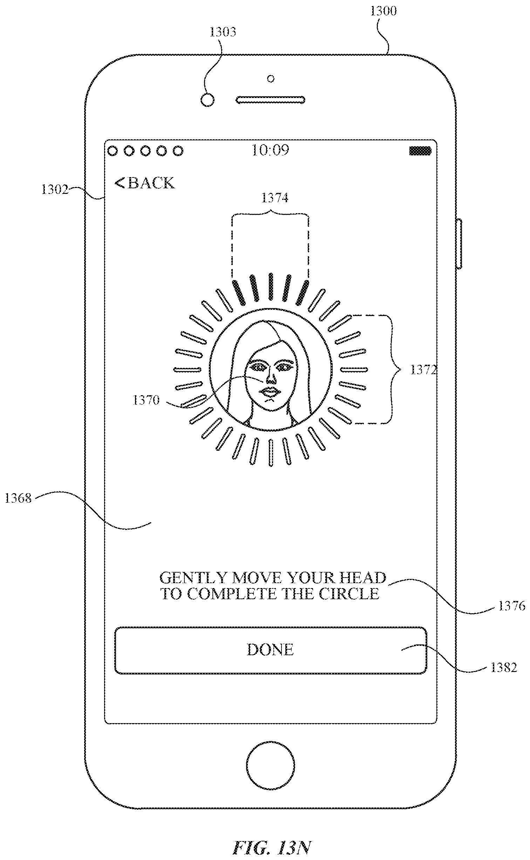

In the example of FIG. 13M, device 1300 detects activation (e.g., selection) of accessibility options affordance 1378 (e.g., by user input 1380). In response to detecting activation of accessibility options affordance 1378, device 1300 displays completion affordance 1382 on accessibility enrollment interface as illustrated in FIG. 13N. In some embodiments, activation of the completion affordance allows the device to proceed using only a partial scan of their facial features.

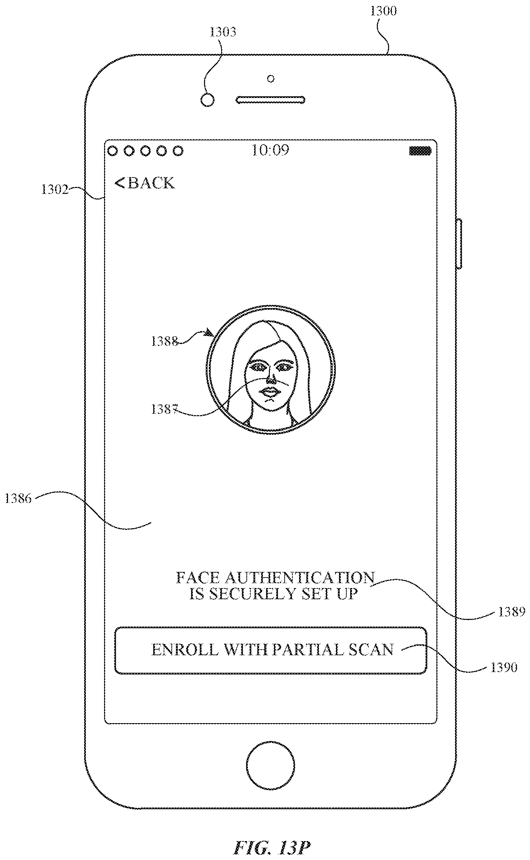

In the example of FIG. 130, device 1300 detects activation (e.g., selection) of completion affordance 1382 by way of user input 1384. In response to detecting activation of completion affordance, device 1300 displays partial scan acknowledgement interface 1386 as illustrated in FIG. 13P. Partial scan acknowledgement interface includes user facial image 1387, which, optionally, has some or all of the visual characteristics of user facial image 1370. Since a portion of the user's face has been successfully enrolled, device 1300 also displays enrollment success indicator 1388, for example, proximate to and/or surrounding user facial image 1387. In the example of FIG. 13P, partial scan acknowledgement interface 1386 includes text prompt 1389, which provides written indication that image data corresponding to at least a portion of the user's face has been successfully captured and enrolled. In the example of FIG. 13P, device 1300 displays enrollment completion affordance 1390.

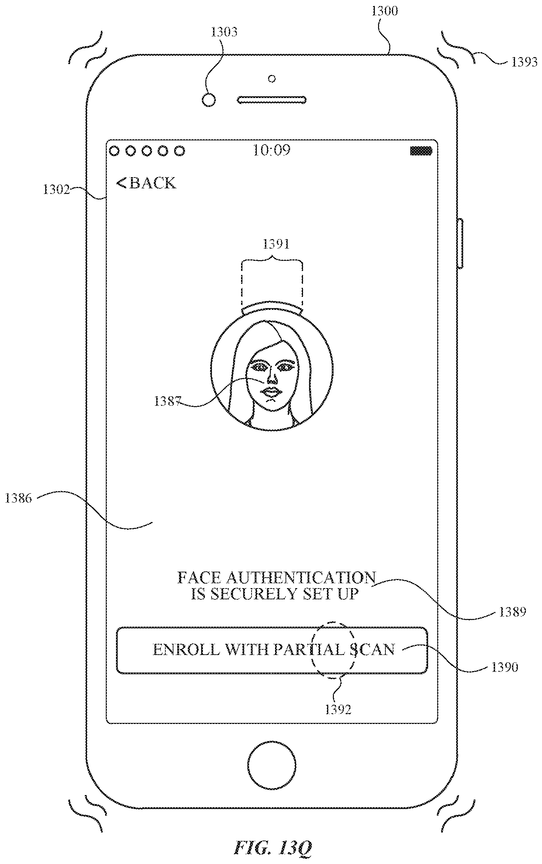

In the example of FIG. 13Q, device 1300 detects activation (e.g., selection) of enrollment completion affordance 1390 by way of user input 1392. In some embodiments, in response to detecting activation of enrollment completion affordance, device 1300 enrolls image data of one or more angular views (e.g., orientations) of the user's face captured during the enrollment process described above. Optionally, device 1300 issues tactile output 1393 to acknowledge completion of the enrollment process. In some embodiments, tactile output 1393 is the same tactile output that is issued in response to successful biometric authorization at device 1300. In the example of FIG. 13Q, device 1300 replaces the display of success indicator 1388 with partial enrollment indicator 1391 proximate to facial image 1387, which visually indicates orientations of the user's face that have been successfully enrolled. In some embodiments, the size (e.g., arc length) and position of partial enrollment indicator 1391 corresponds to portions of the progress meter (e.g., 1310, 1354, 1372) that were transitioned to the "enrolled" state during enrollment. In the example of FIG. 13Q, device 1300 displays partial enrollment indicator 1391 in a similar position as meter portion 1374 to indicate one or more facial orientations corresponding to meter portion 1374 were successfully enrolled.

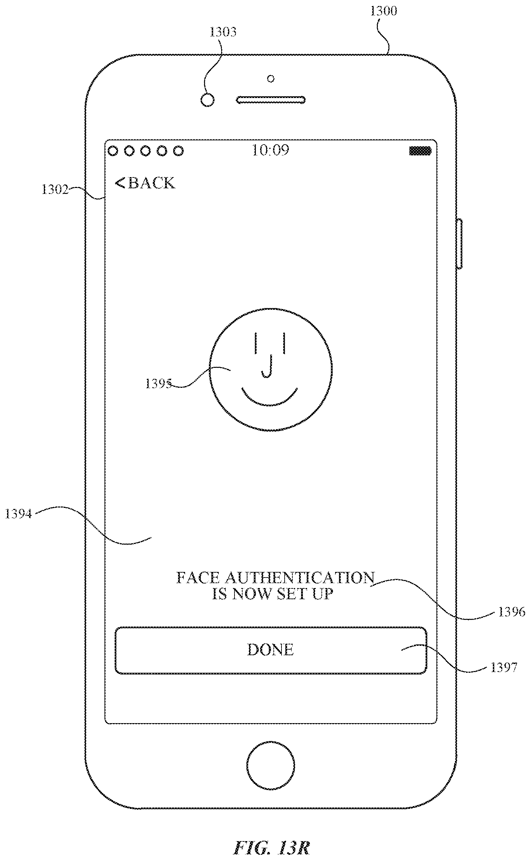

In the example of FIG. 13R, in response to detecting activation (e.g., selection) of enrollment completion affordance 1390 (e.g., by user input 1392), device 1300 displays enrollment completion interface 1394. As shown in FIG. 13R, enrollment completion interface 1394 includes biometric authentication glyph 1395. For example, biometric authentication glyph 1395 optionally is a line drawing of all or part of a face (e.g., a stylized face graphic). In the example of FIG. 13R, enrollment completion interface 1394 also includes text prompt 1396 indicating that the enrollment process is complete and face authentication at the device is set-up and/or enabled. In some examples, enrollment completion interface 1394 also includes completion affordance 1397, activation of which causes device 1300 to exit face authentication set-up. In some examples, enrollment completion interface 1394 does not include facial image 1387.

FIG. 14 is a flow diagram illustrating a method for providing hints to effectively enroll a biometric feature on an electronic device in accordance with some embodiments. Method 1400 is performed at a device (e.g., 100, 300, 500, 1300) with a display, one or more input devices (e.g., a touchscreen, a mic, a camera), and a wireless communication radio (e.g., a Bluetooth connection, WiFi connection, a mobile broadband connection such as a 4G LTE connection). In some embodiments, the display is a touch-sensitive display. In some embodiments, the display is not a touch sensitive display. In some embodiments, the electronic device includes a plurality of cameras. In some embodiments, the electronic device includes only one camera. In some examples, the device includes one or more biometric sensors which, optionally, include a camera, such as a infrared camera, a thermographic camera, or a combination thereof. In some examples, the device further includes a light-emitting device, such as an IR flood light a structured light projector, or a combination thereof. The light-emitting device is, optionally, used to illuminate the biometric feature (the face) during capture of biometric data of the biometric features by the one or more biometric sensors.

As described below, method 1400 provides an intuitive way to provide hints for effectively enrolling a biometric feature on an electronic device. The method reduces the cognitive burden on a user for enrolling a biometric feature on the device, thereby creating a more efficient human-machine interface. For battery-operated computing devices, enabling a user to enroll a biometric feature faster and more efficiently conserves power and increases the time between battery charges

The device displays (1402), on the display, a biometric enrollment user interface (e.g., 1304, 1324) for enrolling a biometric feature (e.g., user face, fingerprint, iris, handprint, or other physical biometric feature that can be used to distinguish one person from another person). Displaying the biometric enrollment user interface includes displaying a representation of the biometric feature (e.g., 1306, 1326, a representation of the head of a user of the device). The appearance of the representation of the biometric feature changes (1404) as the orientation of the biometric feature relative to the one or more biometric sensors (e.g., 1303) changes. For example, the orientation of the biometric feature relative to the one or more biometric sensors optionally is based on the alignment of a face of a user in image data captured by the one or more cameras (e.g., camera data that includes the user's head positioned in the field of view of one or more of the cameras). Displaying a preview of the image captured by the biometric sensors provides the user with feedback about the position and orientation of his or her biometric features relative to the biometric sensors of the device, enabling the user to properly align his or her biometric features with the sensors more quickly and efficiently in order to proper enrollment the biometric features. Providing improved visual feedback to the user enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

While displaying the biometric enrollment user interface, the device detects (1406) that enrollment-prompt criteria have been met with respect to one or more portions of the biometric feature.

In some embodiments, the enrollment-prompt criteria include (1408) a requirement that the biometric feature moves less than a first threshold amount for at least a first threshold time period (as determined by the one or more biometric sensors). Automatically enabling enrollment hints after detecting little to no movement of the user's biometric feature reduces the time required to complete the enrollment process, since a user who is struggling to execute the required movements quickly and automatically receives instructions on how to proceed with the enrollment process. Performing an optimized set of operations when a set of conditions have been met without requiring further user input enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In response to detecting that the enrollment-prompt criteria have been met with respect to one or more portions of the biometric feature, the device outputs (1410) a respective prompt (e.g., 1328, 1332, 1334, 1336, 1340, 1342, 1344, 1346, e.g., a visual, audible, and/or tactile prompt) to move the biometric feature in a respective manner. The respective prompt is selected (1412) based on an enrollment state of one or more portions of the biometric feature (e.g., whether a first portion and/or a second portion of the biometric feature have been enrolled). In particular, in accordance with a determination that the enrollment-prompt criteria have been met with respect to a first portion of the biometric feature that can be enrolled by moving the biometric feature in a first manner, the device outputs (1424) a prompt (e.g., 1328, 1332, 1334, 1336)to move the biometric feature in the first manner. In accordance with a determination that the enrollment-prompt criteria have been met with respect to a second portion of the biometric feature that can be enrolled by moving the biometric feature in a second manner, different from the first manner, outputting the respective prompt includes outputting (1426) a prompt (e.g., 1340, 1342, 1344, 1346) to move the biometric feature in the second manner. Providing visual and/or auditory prompts to move the biometric feature in a particular direction allows the user to quickly and intuitively realize how to position the biometric feature such that a corresponding portion can enrolled. These prompts allow the user the move the biometric feature though the range of orientations required for the enrollment process more quickly and efficiently than they would otherwise. Providing improved visual and/or auditory feedback with instructions on proper movements of the biometric feature therefore enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In some embodiments, in accordance with a determination that auditory prompt criteria are met (e.g., determining whether screen reader functionality of the device is enabled), the device outputs an auditory prompt (e.g., 1334) to move the biometric feature in the first manner (e.g., instead of or in addition to one or more visual prompts). In some embodiments, in accordance with a determination that auditory prompt criteria are not met, the device provides the user with an option to enable auditory prompts for the biometric enrollment. For example, the device displays an affordance (e.g., 1318), which when selected by a user, causes auditory prompts to be enabled, or provide an audio prompt (e.g., 1334, 1344) that describes steps for enabling auditory prompts for the biometric enrollment. Providing auditory instructions to move the biometric feature in a particular direction allows the user to quickly and intuitively realize how to position the biometric feature such that a corresponding portion can enrolled. These prompts allow the user the move the biometric feature though the series of orientations required for the enrollment process more quickly and efficiently than they would otherwise. Providing improved auditory feedback with instructions on proper movements of the biometric feature therefore enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently

In some embodiments, the device outputs the respective prompt (e.g., 1328, 1332, 1334, 1336, 1340, 1342, 1344, 1346, e.g., a visual, audible, and/or tactile prompt) before any portion of the biometric feature has been enrolled. For example, the respective prompt optionally indicates (1422) that the user should start tilting their head to begin the enrollment process.

In some embodiments, the device outputs the respective prompt (e.g., 1328, 1332, 1334, 1336, 1340, 1342, 1344, 1346, e.g., a visual, audible, and/or tactile prompt) after at least a portion of the biometric feature has been enrolled. For example, the prompt optionally indicates that the user should continue tilting their head to continue the enrollment process. Automatically issuing prompts to move the biometric feature in a second direction after the user has moved the biometric feature in the first direction allows the user to quickly and intuitively understand how to continue moving the biometric feature to proceed with the enrollment process. Assisting the user in understanding how to execute the required movements of the biometric feature in quick succession reduces the amount of time required to complete enrollment of the biometric feature. Thus, performing an optimized set of operations when a set of conditions have been met without requiring further user input enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In some embodiments, the device outputs a tactile output (e.g., 1336, 1346).. In some embodiments, the tactile output is accompanied by an audible output (e.g., 1334, 1344). In some embodiments, the tactile output and/or the audio output are generated to coincide with movement of a visual prompt (e.g., 1328, 1340). For example, the tactile outputs optionally correspond to movement of an arrow or arc (e.g., arrow element and arc element in 1328 and/or 1340) in a direction in which the user is being prompted to move the biometric feature.

In some embodiments, the respective prompt includes a tactile output (e.g., 1338, 1366) that is used to indicate a failed biometric authentication with the device. For example, the tactile output that is generated as an error when biometric enrollment has stopped due to a failure to change the orientation of the biometric feature relative to the one or more biometric sensors is the same as the tactile output that is used to indicate a failed biometric authentication.

In the claimed embodiments, the device overlays a visual prompt (e.g., 1328, 1340, 1356) on the representation of the biometric feature. For example, the visual prompt optionally is an arrow indicating the respective manner (direction) in which to move the biometric feature (such as up, down, to the left, to the right, at a diagonal angle between those directions). In some embodiments, the visual prompt is partially transparent. Displaying visual prompt such as an arrow element in the requested direction of movement allows the user to quickly understand how to move the biometric feature such that a portion of the feature corresponding to the requested direction can be properly enrolled. This allows the user execute the requested movement more quickly and efficiently, reducing the amount of time required by the enrollment process. Providing improved visual prompting that illustrates proper movements of the biometric feature therefore enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In some embodiments, the device displays (1414) an animation prompt (e.g., animation of 1328, 1340, or 1356 described with respect to FIGS 13D-13E, 13F-13G, or 13J-13K) to move the biometric feature in the respective manner. For example, the device optionally displays an animation prompting movement in a first manner (e.g., animation of 1328 shown in FIGS. 13D-13E) with respect to the first portion of the biometric feature and displays an animation prompting movement in a second manner (e.g., animation of 1340 in FIGS. 13F-13G) with respect to a second portion of the biometric feature. In some embodiments, displaying the animation prompt includes displaying (1416) an arrow element (e.g., arrow element of 1328, 1340, or 1356) indicating the respective manner in which to move the biometric feature. Displaying an animation that intuitively illustrates the requested direction of movement allows the user to quickly understand how to move the biometric feature such that a portion of the feature corresponding to the requested direction can be properly enrolled. This allows the user execute the requested movement more quickly and efficiently, reducing the amount of time required by the enrollment process. Providing improved visual feedback with intuitive illustrations of proper movements of the biometric feature therefore enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In some embodiments, the device outputs (1420) at least one of a tactile output (e.g., 1336, 1346, 1364) or an auditory output (e.g., 1334, 1344, or 1362) corresponding to the animation. For example, the animation optionally zooms in and out on biometric feature. Alternatively and/or additionally, one or more elements of enrollment user interface (e.g., 1324, 1350) optionally temporarily changes state. In general, the tactile output syncs with the animation. Providing tactile and/or audio outputs that accompany a visual illustration of the requested movement allows the user to quickly understand how to move the biometric feature such that a portion of the feature corresponding to the requested direction can be properly enrolled. This allows the user execute the requested movement more quickly and efficiently, reducing the amount of time required by the enrollment process. Providing improved tactile and/or auditory feedback accompanying an animation therefore enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In some embodiments, the first manner of movement includes rotation about an axis parallel to the display (e.g., in the plane of display 1302) and the second manner of movement includes rotation about an axis parallel to the display. In this case, the animation prompt (e.g., animation of 1328, 1340, or 1356 described with respect to FIGS 13D-13E, 13F-13G, or 13J-13K) includes (1418) simulated rotation of a user interface element (e.g., arc element of 1328, 1340, or 1356) about the axis parallel to the display. For example, if the user is being prompted to rotate the biometric feature clockwise about an axis parallel to the display, the animation optionally includes movement of a user interface element clockwise about an axis parallel to the display. Likewise, if the user is being prompted to rotate the biometric feature counter-clockwise about an axis parallel to the display, the animation optionally includes movement of a user interface element counter-clockwise about an axis parallel to the display. Displaying simulated rotation of an orientation element to illustrate the requested movement allows the user to quickly understand how to move the biometric feature such that a portion of the feature corresponding to the requested direction can be properly enrolled. This allows the user execute the requested movement more quickly and efficiently, reducing the amount of time required by the enrollment process. Providing improved visual feedback with intuitive illustrations of proper movements of the biometric feature therefore enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In some embodiments, the biometric enrollment user interface includes an orientation guide (e.g., 1308) that is overlaid on the representation of the biometric feature (e.g., 1306) and tilts in different directions as the representation of the biometric feature tilts in different directions (e.g., as described above with reference to method 1200). In this example, in accordance with a determination that the enrollment-prompt criteria have been met with respect to the first portion of the biometric feature that can be enrolled by moving the biometric feature in the first manner, the animation prompt (e.g., animation of 1328 or 1356 described with respect to FIGS 13D-13E or 13J-13K) includes movement of a portion of the orientation guide (e.g., the vertical component of 1308) in a direction that the orientation guide would move if the biometric feature moved in the first manner. Displaying and/or rotating the orientation guide overlaid on the representation of the biometric feature provides the user with feedback about the orientation of his or her biometric features relative to the biometric sensors of the device in three-dimensional space, enabling the user more quickly move the biometric feature through the required range of orientations during the enrollment process. Providing improved visual feedback regarding the orientation of the biometric feature to the user therefore enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

Likewise, in accordance with a determination that the enrollment-prompt criteria have been met with respect to the second portion of the biometric feature that can be enrolled by moving the biometric feature in the second manner, the animation prompt (e.g., animation of 1340 described with respect to FIGS. 13F-13G) includes movement of a portion of the orientation guide in a direction that the orientation guide would move if the biometric feature moved in the second manner. In some embodiments, the orientation guide includes a first portion (e.g., the horizontal component of 1308, e.g., a first arc) and a second portion (e.g., the horizontal component of 1308, e.g., second arc that crosses the first arc) and the animation prompt (e.g., animation of 1340 shown in FIGS. 13F-13G) includes moving the first portion of the orientation guide without moving the second portion, or moving the second portion without moving the first portion. In some embodiments if the first portion of the orientation guide is moving, then the second portion ceases to be displayed. Similarly, if the second portion is moving then the first portion ceases to be displayed. In some embodiments, if enrollment is needed for a portion of the biometric feature that is not visible when the feature is tilted up, down, to the left, or to the right, the animation moves in a diagonal direction to prompt the user to tilt the biometric feature in the diagonal direction.

In some embodiments, after outputting a respective prompt (e.g., 1328, 1332, 1334, 1336, 1340, 1342, 1344, 1346) to move the biometric feature in a respective manner, and in response to detecting the movement of the biometric feature, the device enrolls the respective portion of the biometric feature. Optionally, the device updates a progress indicator (e.g., 1310, 1330). While enrolling the respective portion of the biometric feature, the device optionally ceases to provide the prompts. Updating the progress indicator during enrollment in this manner encourages the user to look at the display of the electronic device during the enrollment to improve the ability to detect when gaze is directed at the display, and thus whether or not the user is paying attention to the device. Encouraging the user to look at the display of the electronic device enhances the operability of the device and makes the user-device interface more efficient (e.g., by ensuring that the gaze of the user is directed at the display and thereby ensuring that the biometric feature of the user is properly enrolled) which, additionally, reduces power usage and improves battery life of the device by enabling the user to use the device more quickly and efficiently.

In some embodiments, after enrolling the respective portion of the biometric feature, the device determines that enrollment-prompt criteria have been met with respect to one or more portions of the biometric feature. In response to determining that enrollment-prompt criteria have been met with respect to one or more portions of the biometric feature, (e.g., the user stops responding during enrollment for a threshold period of time), the device outputs another respective prompt (e.g., 1356, 1358, 1362, 1364) to move the biometric feature in a respective manner determined based on the one or more portions of the biometric feature for which the enrollment-prompt criteria have been met. For example, the device starts prompting the user to change the orientation of the biometric feature with respect to the one or more biometric sensors to enroll the portions of the biometric feature that have not yet been enrolled. In some embodiments the prompts have similar characteristics to the other prompts described above. In some embodiments, the prompts progress in a similar manner as the prompts described above. In some embodiments, a first prompt (e.g., 1356, 1358, 1362, 1364), is provided in a first direction after the first time period with little or no movement of the biometric feature relative to the one or more biometric sensors, and a second prompt is provided in a second direction after the second time period (longer than the first time period) with little or no movement of the biometric feature relative to the one or more biometric sensors, and an option (e.g., 1382, 1390) to complete the biometric enrollment without enrolling all portions of the biometric feature is provided after the third time period (longer than the first time period) with little or no movement of the biometric feature relative to the biometric sensors. Automatically providing prompts to move the biometric feature in a different direction after detecting little to no movement of the biometric feature assists a user who is struggling or unable to execute the movement in the first direction by quickly and automatically providing instructions on how to proceed with the enrollment process. Performing an optimized set of operations when a set of conditions have been met without requiring further user input enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In some embodiments, after outputting a respective prompt (e.g., (e.g., 1328, 1332, 1334, 1336, 1340, 1342, 1344, 1346, 1356, 1358, 1362, 1364) to move the biometric feature in a respective manner, in accordance with a determination that accessibility prompt criteria have been met, the device displays (1428) an option (e.g., 1378) to proceed with the enrollment without further changes in the orientation of the biometric feature relative to the one or more biometric sensors (e.g., 1303). The accessibility prompt criteria include (1430) a requirement that the orientation of the biometric feature relative to the one or more biometric sensors has changed less than a predetermined amount for a respective period of time. For example, the biometric feature of the user has not been detected as moving for a threshold period of time after providing the second prompt (e.g., 1340, 1342, 1344, 1346). In this case, an accessibility affordance (e.g., 1378) is displayed, and user optionally selects (e.g., 1380) the accessibility affordance. In other words, the user can approve use of biometric feature authentication for a view of the biometric feature from a range of orientations that is less than the available range of orientations. In some embodiments, the respective period of time is greater than the second period of time. For example, after a delay with little or not movement of the biometric feature relative to the one or more biometric sensors (e.g., 1303), the device first prompts (e.g., with 1328, 1332, 1334, 1336) movement of the biometric feature in a first direction; then after a delay with little or no movement, the device prompts (e.g., with 1340, 1342, 1344, 1346) movement of the biometric feature in a second direction; then after an additional delay with little or no movement, the device provides an option (e.g., 1378) to proceed with enrollment without additional movement of the biometric feature relative to the one or more biometric sensors. In some embodiments, the accessibility prompt (e.g., 1378) is displayed after enough of the biometric feature has been captured to ensure secure authentication with at least a portion of the biometric feature (e.g., as soon as one angle of the face has been captured and enrolled a user with limited mobility can select the accessibility option to enroll the biometric feature using just the enrolled angles).

In some embodiments, the device detects (1432) selection of the option to proceed with the enrollment without further changes in the orientation of the biometric feature relative to the one or more biometric sensors. For example, in some embodiments, the device receives a user input (e.g., 1382) indicating a selection of an affordance (e.g., 1380) of the accessibility interface (e.g., 1368) for confirming enrollment of the biometric data. In response to detecting selection of the option to proceed with the enrollment without further changes in the orientation of the biometric feature relative to the one or more biometric sensors (1434), the device forgoes (1436) (e.g., skips) one or more steps in the biometric enrollment. For example, the device skips display of a second biometric enrollment user interface that would be displayed in a standard enrollment process where the biometric feature changes orientation as prompted by the device (e.g., there is no second enrollment flow if the user enrolls via the accessibility interface).

In some embodiments, in response to selection of the option to proceed with the enrollment without further changes in the orientation of the biometric feature relative to the one or more biometric sensors (1434), the device displays (1438) an indication that enrollment of the biometric feature is complete that includes information about which portions of the biometric feature have been enrolled (e.g., 1391 and 1389). In some embodiments, the device displays an affordance (e.g., 1390), which when selected, confirms partial enrollment of the biometric feature.

In some embodiments, in response to detecting selection of the of the option to proceed with the enrollment without further changes in the orientation of the biometric feature relative to the one or more biometric sensors, the device outputs a tactile output (e.g., 1393) that is used to indicate successful biometric authentication with the biometric feature once the biometric feature has been enrolled. For example, the tactile output that is generated when biometric enrollment is complete is optionally the same tactile output that is used to indicate successful authentication with the biometric feature.

Note that details of the processes described above with respect to method 1400 (e.g., FIGS. 14A-14B) are also applicable in an analogous manner to the methods described herein. For example, the accessibility interface described in method 1000 can be applied with respect to the accessibility enrollment interface (e.g., 1368). For another example, the orientation guide can be applied with respect to the orientation guide (e.g., 1308).

The operations in the information processing methods described above are, optionally, implemented by running one or more functional modules in an information processing apparatus such as general purpose processors or application specific chips.

## Claims

1. A method, comprising:
at an electronic device with one or more biometric sensors and a display:
displaying, on the display, a biometric enrollment user interface for enrolling a biometric feature, wherein displaying the biometric enrollment user interface includes displaying a representation of the biometric feature, wherein the appearance of the representation of the biometric feature changes as the orientation of the biometric feature relative to the one or more biometric sensors changes, and wherein the biometric feature includes biometric data associated with a portion of a face;
while displaying the biometric enrollment user interface:
enrolling a portion of the biometric feature; and
after enrolling the portion of the biometric feature, detecting that enrollment-prompt criteria have been met with respect to one or more portions of the biometric feature; and
in response to detecting that the enrollment-prompt criteria have been met with respect to one or more portions of the biometric feature, outputting a respective prompt to move the biometric feature in a respective manner, wherein the respective prompt is selected based on an enrollment state of one or more portions of the biometric feature and is displayed over the representation of the biometric feature, including:
in accordance with a determination that the enrollment-prompt criteria have been met with respect to a first portion of the biometric feature that can be enrolled by moving the biometric feature in a first manner, outputting the respective prompt includes outputting a visual prompt including an element that provides an indication to move the biometric feature in the first manner; and
in accordance with a determination that the enrollment-prompt criteria have been met with respect to a second portion of the biometric feature, different from the first portion of the biometric feature, that can be enrolled by moving the biometric feature in a second manner, different from the first manner, outputting the respective prompt includes outputting a visual prompt including an element that provides an indication to move the biometric feature in the second manner.

2. The method of claim 1, wherein the enrollment-prompt criteria include a requirement that the biometric feature moves less than a first threshold amount for at least a first threshold time period.

3. The method of any of claims 1-2, wherein moving the biometric feature in the first manner includes moving the biometric feature in a first direction and moving the biometric feature in the second manner includes moving the biometric feature in a second direction different from the first direction.

4. The method of any of claims 1-3, wherein:
the enrollment prompt criteria include a requirement that the biometric feature has moved less than a threshold amount for a first period of time,
outputting the respective prompt includes a visual prompt including an element that provides an indication to move the biometric feature in the first manner, and
the method includes:
after outputting the respective prompt, determining that the biometric feature has moved less than the threshold amount for a second period of time that is greater than the first period of time; and
in response to determining that the biometric feature has moved less than the threshold amount for the second period of time, displaying a subsequent prompt that is different from the respective prompt.

5. The method of claim 3, wherein:
outputting a visual prompt including an element that provides an indication to move the biometric feature in the first manner includes outputting a visual prompt including an element that provides an indication to move the biometric feature in the first direction; and
outputting a visual prompt including an element that provides an indication to move the biometric feature in the second manner includes outputting a visual prompt including an element that provides an indication to move the biometric feature in the second direction.

6. The method of any of claims 1-5, wherein outputting a respective prompt to move the biometric feature in a respective manner includes:
in accordance with a determination that auditory prompt criteria are met, outputting an auditory prompt to move the biometric feature in the first manner.

7. The method of any of claims 1-6, wherein the visual prompt is an animation prompt including the element that provides the indication to move the biometric feature in the respective manner.

8. The method of claim 7, wherein including the element that provides the indication to move the biometric feature in the respective manner includes displaying an arrow element indicating the respective manner in which to move the biometric feature.

9. The method of any of claims 7-8, wherein:
the first manner of movement includes rotation about an axis parallel to the display;
the second manner of movement includes rotation about the axis parallel to the display; and
the animation prompt includes simulated rotation of a user interface element about the axis parallel to the display.

10. The method of any of claims 7-9, wherein:
the biometric enrollment user interface includes an orientation guide that is overlaid on the representation of the biometric feature and tilts in different directions as the representation of the biometric feature tilts in different directions; and
in accordance with a determination that the enrollment-prompt criteria have been met with respect to the first portion of the biometric feature that can be enrolled by moving the biometric feature in the first manner, the animation prompt includes movement of a portion of the orientation guide in a direction that the orientation guide would move if the biometric feature moved in the first manner; and
in accordance with a determination that the enrollment-prompt criteria have been met with respect to the second portion of the biometric feature that can be enrolled by moving the biometric feature in the second manner, the animation prompt includes movement of a portion of the orientation guide in a direction that the orientation guide would move if the biometric feature moved in the second manner.

11. The method of any of claims 1-10, including:
after outputting the respective prompt, detecting movement of the biometric feature that meets enrollment criteria for a respective portion of the biometric feature;
in response to detecting the movement of the biometric feature, enrolling the respective portion of the biometric feature;
while enrolling the respective portion of the biometric feature, ceasing to provide the prompts;
after enrolling the respective portion of the biometric feature, determining that enrollment-prompt criteria have been met with respect to one or more portions of the biometric feature; and
in response to determining that enrollment-prompt criteria have been met with respect to one or more portions of the biometric feature, outputting another respective prompt to move the biometric feature in a respective manner determined based on the one or more portions of the biometric feature for which the enrollment-prompt criteria have been met.

12. A computer-readable storage medium storing one or more programs configured to be executed by one or more processors of an electronic device with one or more biometric sensors and a display, the one or more programs including instructions for performing the method of any of claims 1-11.

13. An electronic device, comprising:
one or more biometric sensors;
a display;
one or more processors; and
memory storing one or more programs configured to be executed by the one or more processors, the one or more programs including instructions for performing the method of any of claims 1-11.

## Patentansprüche

1. Verfahren, umfassend:
auf einer elektronischen Vorrichtung mit einem oder mehreren biometrischen Sensoren und einer Anzeige:
Anzeigen, auf der Anzeige, einer Benutzerschnittstelle für biometrische Registrierung zum Registrieren eines biometrischen Merkmals, wobei das Anzeigen der Benutzerschnittstelle für biometrische Registrierung das Anzeigen einer Darstellung des biometrischen Merkmals einschließt, wobei sich das Erscheinungsbild der Darstellung des biometrischen Merkmals ändert, wenn sich die Ausrichtung des biometrischen Merkmals relativ zu dem einen oder den mehreren biometrischen Sensoren ändert, und wobei das biometrische Merkmal biometrische Daten einschließt, die einem Abschnitt eines Gesichts zugeordnet sind;
während des Anzeigens der Benutzeroberfläche für biometrische Registrierung:
Registrieren eines Abschnitts des biometrischen Merkmals; und
nach dem Registrieren des Abschnitts des biometrischen Merkmals, Erkennen, dass Registrierungsaufforderungskriterien in Bezug auf einen oder mehrere Abschnitte des biometrischen Merkmals erfüllt wurden; und
als Reaktion auf das Erkennen, dass die Registrierungsaufforderungskriterien in Bezug auf einen oder mehrere Abschnitte des biometrischen Merkmals erfüllt wurden, Ausgeben einer jeweiligen Aufforderung zum Verschieben des biometrischen Merkmals auf eine entsprechende Weise, wobei die jeweilige Aufforderung basierend auf einem Registrierungszustand eines oder mehrerer Abschnitte des biometrischen Merkmals ausgewählt wird und über der Darstellung des biometrischen Merkmals angezeigt wird, einschließlich:
gemäß einer Bestimmung, dass die Registrierungsaufforderungskriterien in Bezug auf einen ersten Abschnitt des biometrischen Merkmals erfüllt wurden, das durch Verschieben des biometrischen Merkmals auf eine erste Weise registriert werden kann, schließt das Ausgeben der jeweiligen Aufforderung das Ausgeben einer visuellen Aufforderung einschließlich eines Elements ein, das eine Angabe bereitstellt, um das biometrische Merkmal auf die erste Weise zu verschieben; und
gemäß einer Bestimmung, dass die Registrierungsaufforderungskriterien in Bezug auf einen zweiten Abschnitt des biometrischen Merkmals erfüllt wurden, der sich von dem ersten Abschnitt des biometrischen Merkmals unterscheidet, das durch Verschieben des biometrischen Merkmals auf eine zweite Weise, die sich von der ersten Weise unterscheidet, registriert werden kann, schließt das Ausgeben der jeweiligen Aufforderung das Ausgeben einer visuellen Aufforderung einschließlich eines Elements ein, das eine Angabe bereitstellt, um das biometrische Merkmal auf die zweite Weise zu verschieben.

2. Verfahren nach Anspruch 1, wobei die Registrierungsaufforderungskriterien eine Anforderung einschließen, dass das biometrische Merkmal für mindestens einen ersten Schwellenzeitraum weniger als ein erster Schwellenwert verschoben wird.

3. Verfahren nach einem der Ansprüche 1 bis 2, wobei das Verschieben des biometrischen Merkmals auf die erste Weise das Verschieben des biometrischen Merkmals in eine erste Richtung einschließt und das Verschieben des biometrischen Merkmals auf die zweite Weise das Verschieben des biometrischen Merkmals in eine zweite Richtung einschließt, die sich von der ersten Richtung unterscheidet.

4. Verfahren nach einem der Ansprüche 1 bis 3, wobei:
die Registrierungsaufforderungskriterien eine Anforderung einschließen, dass das biometrische Merkmal für einen ersten Zeitraum weniger als ein Schwellenwert verschoben wurde,
das Ausgeben der jeweiligen Aufforderung eine visuelle Aufforderung einschließt, die ein Element einschließt, das eine Angabe bereitstellt, um das biometrische Merkmal auf die erste Weise zu verschieben, und
das Verfahren Folgendes einschließt:
nach dem Ausgeben der jeweiligen Aufforderung, Bestimmen, dass sich das biometrische Merkmal für einen zweiten Zeitraum, der größer als der erste Zeitraum ist, um weniger als einen Schwellenwert verschoben hat; und
als Reaktion auf das Bestimmen, dass sich das biometrische Merkmal für den zweiten Zeitraum weniger als der Schwellenwert verschoben hat, Anzeigen einer nachfolgenden Aufforderung, die sich von der jeweiligen Aufforderung unterscheidet.

5. Verfahren nach Anspruch 3, wobei:
das Ausgeben einer visuellen Aufforderung einschließlich eines Elements, das eine Angabe bereitstellt, um das biometrische Merkmal auf die erste Weise zu verschieben, das Ausgeben einer visuellen Aufforderung einschließlich eines Elements, das eine Angabe bereitstellt, um das biometrische Merkmal in die erste Richtung zu verschieben, einschließt; und
das Ausgeben einer visuellen Aufforderung einschließlich eines Elements, das eine Angabe bereitstellt, um das biometrische Merkmal auf die zweite Weise zu verschieben, das Ausgeben einer visuellen Aufforderung einschließlich eines Elements, das eine Angabe bereitstellt, um das biometrische Merkmal in die zweite Richtung zu verschieben, einschließt.

6. Verfahren nach einem der Ansprüche 1 bis 5, wobei das Ausgeben einer jeweiligen Aufforderung zum Verschieben des biometrischen Merkmals auf eine jeweilige Weise einschließt:
gemäß einer Bestimmung, dass akustische Aufforderungskriterien erfüllt sind, Ausgeben einer akustischen Aufforderung, um das biometrische Merkmal auf die erste Weise zu verschieben.

7. Verfahren nach einem der Ansprüche 1 bis 6, wobei die visuelle Aufforderung eine Animationsaufforderung ist, die das Element einschließt, das die Angabe bereitstellt, das biometrische Merkmal auf die jeweilige Weise zu verschieben.

8. Verfahren nach Anspruch 7, wobei das Einschließen des Elements, das die Angabe bereitstellt, das biometrische Merkmal auf die jeweilige Weise zu verschieben, das Anzeigen eines Pfeilelements einschließt, das die jeweilige Weise angibt, in der das biometrische Merkmal zu verschieben ist.

9. Verfahren nach einem der Ansprüche 7 bis 8, wobei:
die erste Verschiebungsart eine Drehung um eine Achse parallel zu der Anzeige einschließt;
die zweite Verschiebungsart eine Drehung um die Achse parallel zu der Anzeige einschließt; und
die Animationsaufforderung eine simulierte Drehung eines Benutzerschnittstellenelements um die Achse parallel zu der Anzeige einschließt.

10. Verfahren nach einem der Ansprüche 7 bis 9, wobei:
die Benutzerschnittstelle zur biometrischen Registrierung eine Ausrichtungsführung einschließt, die der Darstellung des biometrischen Merkmals überlagert ist und in unterschiedliche Richtungen geneigt ist, wenn die Darstellung des biometrischen Merkmals in unterschiedliche Richtungen geneigt ist; und
gemäß einer Bestimmung, dass die Registrierungsaufforderungskriterien in Bezug auf einen ersten Abschnitt des biometrischen Merkmals erfüllt wurden, das durch Verschieben des biometrischen Merkmals auf eine erste Weise registriert werden kann; die Animationsaufforderung eine Verschiebung eines Abschnitts der Ausrichtungsführung in einer Richtung einschließt, in der die Ausrichtungsführung verschoben würde, wenn sich das biometrische Merkmal auf die erste Weise verschöbe; und
gemäß einer Bestimmung, dass die Registrierungsaufforderungskriterien in Bezug auf einen zweiten Abschnitt des biometrischen Merkmals erfüllt wurden, das durch Verschieben des biometrischen Merkmals auf die zweite Weise registriert werden kann, die Animationsaufforderung eine Verschiebung eines Abschnitts der Ausrichtungsführung in einer Richtung einschließt, in der die Ausrichtungsführung verschoben würde, wenn sich das biometrische Merkmal auf die zweite Weise verschöbe.

11. Verfahren nach einem der Ansprüche 1 bis 10, das Folgendes einschließt:
nach dem Ausgeben der jeweiligen Aufforderung, Erkennen einer Verschiebung des biometrischen Merkmals, das Registrierungskriterien für einen jeweiligen Abschnitt des biometrischen Merkmals erfüllt;
als Reaktion auf das Erkennen der Verschiebung des biometrischen Merkmals, Registrieren des jeweiligen Abschnitts des biometrischen Merkmals;
während der Registrierung des jeweiligen Abschnitts des biometrischen Merkmals, Beenden der Bereitstellung von Aufforderungen;
nach dem Registrieren des jeweiligen Abschnitts des biometrischen Merkmals, Bestimmen, dass Registrierungsaufforderungskriterien in Bezug auf einen oder mehrere Abschnitte des biometrischen Merkmals erfüllt wurden; und
als Reaktion auf das Bestimmen, dass die Registrierungsaufforderungskriterien in Bezug auf einen oder mehrere Abschnitte des biometrischen Merkmals erfüllt wurden, Ausgeben einer anderen jeweiligen Aufforderung zum Verschieben des biometrischen Merkmals auf eine jeweilige Weise, die basierend auf dem einen oder den mehreren Abschnitten des biometrischen Merkmals bestimmt wird, für das die Registrierungsaufforderungskriterien erfüllt wurden.

12. Computerlesbares Speicherungsmedium, das eines oder mehrere Programme speichert, die zur Ausführung durch einen oder mehrere Prozessoren einer elektronischen Vorrichtung mit einem oder mehreren biometrischen Sensoren und einer Anzeige konfiguriert sind, wobei das eine oder die mehreren Programme Anweisungen zum Durchführen des Verfahrens nach einem der Ansprüche 1 bis 11 einschließen.

13. Elektronische Vorrichtung, umfassend:
einen oder mehrere biometrische Sensoren;
eine Anzeige;
einen oder mehrere Prozessoren; und
einen Speicher, auf dem eines oder mehrere Programme gespeichert sind, die konfiguriert sind, um durch den einen oder die mehreren Prozessoren ausgeführt zu werden, wobei das eine oder die mehreren Programme Anweisungen zum Durchführen des Verfahrens nach einem der Ansprüche 1 bis 11 einschließen.

## Revendications

1. Procédé, comprenant :
au niveau d'un dispositif électronique avec un ou plusieurs capteurs biométriques et un affichage :
le fait d'afficher, sur l'affichage, une interface utilisateur d'inscription biométrique pour inscrire une caractéristique biométrique, dans lequel l'affichage de l'interface utilisateur d'inscription biométrique inclut l'affichage d'une représentation de la caractéristique biométrique, dans lequel l'apparence de la représentation de la caractéristique biométrique change à mesure que l'orientation de la caractéristique biométrique par rapport au ou aux capteurs biométriques change, et dans lequel la caractéristique biométrique inclut des données biométriques associées à une partie d'un visage ;
tout en affichant l'interface utilisateur d'inscription biométrique :
l'inscription d'une partie de la caractéristique biométrique ; et
après l'inscription de la partie de la caractéristique biométrique, la détection que des critères d'invite d'inscription ont été respectés par rapport à une ou plusieurs parties de la caractéristique biométrique ; et
en réponse à la détection que les critères d'invite d'inscription ont été respectés par rapport à une ou plusieurs parties de la caractéristique biométrique, la sortie d'une invite respective pour déplacer la caractéristique biométrique d'une manière respective, dans lequel l'invite respective est sélectionnée sur la base d'un état d'inscription d'une ou plusieurs parties de la caractéristique biométrique et est affichée par-dessus la représentation de la caractéristique biométrique, incluant :
conformément à une détermination que les critères d'invite d'inscription ont été respectés par rapport à une première partie de la caractéristique biométrique qui peut être inscrite en déplaçant la caractéristique biométrique d'une première manière, la sortie de l'invite respective inclut la sortie d'une invite visuelle incluant un élément qui fournit une indication pour déplacer la caractéristique biométrique de la première manière ; et
conformément à une détermination que les critères d'invite d'inscription ont été respectés par rapport à une deuxième partie de la caractéristique biométrique, différente de la première partie de la caractéristique biométrique, qui peut être inscrite en déplaçant la caractéristique biométrique d'une deuxième manière, différente de la première manière, la sortie de l'invite respective inclut la sortie d'une invite visuelle incluant un élément qui fournit une indication pour déplacer la caractéristique biométrique de la deuxième manière.

2. Procédé selon la revendication 1, dans lequel les critères d'invite d'inscription incluent une exigence selon laquelle la caractéristique biométrique se déplace de moins d'une première quantité seuil pendant au moins une première période de temps seuil.

3. Procédé selon l'une quelconque des revendications 1 à 2, dans lequel le déplacement de la caractéristique biométrique de la première manière inclut le déplacement de la caractéristique biométrique dans une première direction et le déplacement de la caractéristique biométrique de la deuxième manière inclut le déplacement de la caractéristique biométrique dans une deuxième direction différente de la première direction.

4. Procédé selon l'une quelconque des revendications 1 à 3, dans lequel :
les critères d'invite d'inscription incluent une exigence selon laquelle la caractéristique biométrique s'est déplacée de moins qu'une quantité seuil pendant une première période de temps,
la sortie de l'invite respective inclut une invite visuelle incluant un élément qui fournit une indication pour déplacer la caractéristique biométrique de la première manière, et
le procédé inclut :
après la sortie de l'invite respective, la détermination que la caractéristique biométrique s'est déplacée de moins que la quantité seuil pendant une deuxième période de temps qui est supérieure à la première période de temps ; et
en réponse à la détermination que la caractéristique biométrique s'est déplacée de moins que la quantité seuil pendant la deuxième période de temps, l'affichage d'une invite ultérieure qui est différente de l'invite respective.

5. Procédé selon la revendication 3, dans lequel :
la sortie d'une invite visuelle incluant un élément qui fournit une indication pour déplacer la caractéristique biométrique de la première manière inclut la sortie d'une invite visuelle incluant un élément qui fournit une indication pour déplacer la caractéristique biométrique dans la première direction ; et
la sortie d'une invite visuelle incluant un élément qui fournit une indication pour déplacer la caractéristique biométrique de la deuxième manière inclut la sortie d'une invite visuelle incluant un élément qui fournit une indication pour déplacer la caractéristique biométrique dans la deuxième direction.

6. Procédé selon l'une quelconque des revendications 1 à 5, dans lequel la sortie d'une invite respective pour déplacer la caractéristique biométrique d'une manière respective inclut :
conformément à une détermination que des critères d'invite auditive sont respectés, la sortie d'une invite auditive pour déplacer la caractéristique biométrique de la première manière.

7. Procédé selon l'une quelconque des revendications 1 à 6, dans lequel l'invite visuelle est une invite d'animation incluant l'élément qui fournit l'indication pour déplacer la caractéristique biométrique de la manière respective.

8. Procédé selon la revendication 7, dans lequel l'inclusion de l'élément qui fournit l'indication pour déplacer la caractéristique biométrique de la manière respective inclut l'affichage d'un élément fléché indiquant la manière respective selon laquelle déplacer la caractéristique biométrique.

9. Procédé selon l'une quelconque des revendications 7 à 8, dans lequel :
la première manière de déplacement inclut une rotation autour d'un axe parallèle à l'affichage ;
la deuxième manière de déplacement inclut une rotation autour de l'axe parallèle à l'affichage ; et
l'invite d'animation inclut une rotation simulée d'un élément d'interface utilisateur autour de l'axe parallèle à l'affichage.

10. Procédé selon l'une quelconque des revendications 7 à 9, dans lequel :
l'interface utilisateur d'inscription biométrique inclut un guide d'orientation qui est superposé sur la représentation de la caractéristique biométrique et s'incline dans des directions différentes à mesure que la représentation de la caractéristique biométrique s'incline dans des directions différentes ; et
conformément à une détermination que les critères d'invite d'inscription ont été respectés par rapport à la première partie de la caractéristique biométrique qui peut être inscrite en déplaçant la caractéristique biométrique de la première manière, l'invite d'animation inclut un déplacement d'une partie du guide d'orientation dans une direction dans laquelle le guide d'orientation se déplacerait si la caractéristique biométrique se déplaçait de la première manière ; et
conformément à une détermination que les critères d'invite d'inscription ont été respectés par rapport à la deuxième partie de la caractéristique biométrique qui peut être inscrite en déplaçant la caractéristique biométrique de la deuxième manière, l'invite d'animation inclut un déplacement d'une partie du guide d'orientation dans une direction dans laquelle le guide d'orientation se déplacerait si la caractéristique biométrique se déplaçait de la deuxième manière.

11. Procédé selon l'une quelconque des revendications 1 à 10, incluant :
après la sortie de l'invite respective, la détection d'un déplacement de la caractéristique biométrique qui respecte des critères d'inscription pour une partie respective de la caractéristique biométrique ;
en réponse à la détection du déplacement de la caractéristique biométrique, l'inscription de la partie respective de la caractéristique biométrique ;
pendant l'inscription de la partie respective de la caractéristique biométrique, l'arrêt de la fourniture des invites ;
après l'inscription de la partie respective de la caractéristique biométrique, la détermination que les critères d'invite d'inscription ont été respectés par rapport à une ou plusieurs parties de la caractéristique biométrique ; et
en réponse à la détermination que les critères d'invite d'inscription ont été respectés par rapport à une ou plusieurs parties de la caractéristique biométrique, la sortie d'une autre invite respective pour déplacer la caractéristique biométrique d'une manière respective déterminée sur la base de la ou des parties de la caractéristique biométrique pour lesquelles les critères d'invite d'inscription ont été respectés.

12. Support de stockage lisible par ordinateur stockant un ou plusieurs programmes configurés pour être exécutés par un ou plusieurs processeurs d'un dispositif électronique avec un ou plusieurs capteurs biométriques et un affichage, le ou les programmes incluant des instructions pour mettre en œuvre le procédé selon l'une quelconque des revendications 1 à 11.

13. Dispositif électronique, comprenant :
un ou plusieurs capteurs biométriques ;
un affichage ;
un ou plusieurs processeurs ; et
de la mémoire stockant un ou plusieurs programmes configurés pour être exécutés par le ou les processeurs, le ou les programmes incluant des instructions pour mettre en œuvre le procédé selon l'une quelconque des revendications 1 à 11.
